## Europäisches Patentamt
## European Patent Office
## Office européen des brevets

(19)

(11) Numéro de publication: **0 250 337 B1**

(12) **FASCICULE DE BREVET EUROPEEN**

(45) Date de publication du fascicule du brevet:
05.12.90

(51) Int. Cl.⁵: **B01D 71/34**, C08L 27/16

(21) Numéro de dépôt: 87420142.9

(22) Date de dépôt: 22.05.87

(54) Membranes semi-perméables séchables et hydrophiles à base de polyfluorure de vinylidène.

(30) Priorité: 20.06.86 FR 8609158

(43) Date de publication de la demande:
23.12.87 Bulletin 87/52

(45) Mention de la délivrance du brevet:
05.12.90 Bulletin 90/49

(84) Etats contractants désignés:
AT BE CH DE ES GB GR IT LI LU NL SE

(56) Documents cités:
EP-A- 0 012 557
EP-A- 0 037 836
EP-A- 0 040 670
EP-A- 0 054 354
FR-A- 2 147 269
US-A- 4 191 811

Le dossier contient des informations techniques
présentées postérieurement au dépôt de la demande et
ne figurant pas dans le présent fascicule.

(73) Titulaire: RHONE-POULENC RECHERCHES, 25 Quai
Paul Doumer, F-92408 Courbevoie Cedex(FR)

(72) Inventeur: Fabre, Albert, 37 Auguste Renoir,
F-69200 Venissieux(FR)

(74) Mandataire: Seugnet, Jean Louis et al,
RHONE-POULENC CHIMIE SERVICE BREVETS
CHIMIE 25 Quai Paul Doumer, F-92408 Courbevoie
Cédex(FR)

ACTORUM AG

**EP 0 250 337 B1**

## Description

La présente invention concerne des membranes semi-perméables hydrophiles et séchables (sans perdre leurs propriétés), à base principalement de polyfluorure de vinylidène (PVDF).

Il est intéressant notamment dans le domaine de l'utrafiltration et/ou de la microfiltration d'utiliser des membranes à base de PVDF, car de telles membranes présentent de bonnes propriétés mécaniques, une bonne résistance aux produits chimiques, notamment aux solvants organiques usuels, et peuvent être aisément stérilisées à la température (125°C). Or il s'avère que les membranes en PVDF ne sont pas hydrophiles et que cela est gènant notamment dans leur utilisation pour des opérations d'ultra-filtration et/ou de microfiltration lorsqu'on utilise des solutions aqueuses.

Lorsque des membranes semi-perméables en PVDF ont été séchées, il est nécessaire pour leur donner des propriétés hydrophiles par exemple, de les traiter par une solution aqueuse à 80 % d'alcool, pendant quelques minutes, mais cette façon de faire n'est pas très commode dans des appareils industriels munis de telles membranes.

Une autre façon de rendre hydrophile une membrane perméable en PVDF consiste par exemple à la traiter par une base puis à faire réagir ensuite de la polyéthylènimine, comme cela est décrit dans la demande japonaise JP 53 110680. Mais il s'agit la d'une méthode chimique compliquée.

Un but de la présente invention est donc l'obtention de membranes semi-perméables en PVDF qui ne présentent pas les inconvénients des membranes en PVDF de l'art antérieur.

Un autre but de la présente invention est l'obtention de membranes semi-perméables en PVDF, qui tout en conservant les avantages présentés par ce matériau, peuvent être de plus hydrophiles et conserver cette propriété même après avoir été séchées.

Un autre but de la présente invention est l'obtention de membranes semi-perméables en PVDF, hydrophiles et séchables, isotropes ou anisotropes, sous forme de membranes planes ou de fibres creuses, et dont la gamme des zones de coupure peut être très large.

Un autre but de la présente invention est l'obtention de membranes semi-perméables, qui présentent tous les avantages décrits dans le paragraphe ci-dessus et qui de plus peuvent être préparées de façon très simple, sans faire intervenir de traitements de surface d'une membrane de PVDF déjà préparée ou sans imposer d'utiliser un copolymère de PVDF ayant des groupements hydrophiles amenés par le monomère autre que celui du PVDF.

Il a donc été trouvé et c'est ce qui fait l'objet de la présente invention des membranes semi-perméables hydrophiles et séchables en conservant leurs propriétés constituées par un mélange de polyfluorure de vinlyidène et d'un polymère hydrophile, caractérisée en ce que ledit mélange contient plus de 70% en poids de PVDF et moins de 30 % en poids d'un polymère hydrophile pris dans le groupe formé par les polysulfones sulfonées et les copolyméres de l'acrylonitrile avec des monomères contenant des groupements sulfoniques.

Un autre objet de la présente invention est un procédé simple de préparation de membranes semi-perméables hydrophiles et séchables en conservant leurs propriétés, caractérisé en ce que les dites membranes sont obtenues à partir d'une solution homogène de PVDF et du polymère hydrophile.

Les membranes semi-perméables selon la présente invention peuvent être sous forme de fibres creuses, c'est à dire de petits tubes dont le diamètre externe est généralement inférieur à 1500 μm et dont le diamètre interne est généralement supérieur à 100 μm. De préférence le diamètre externe est inférieur à 1000 μm et le diamètre interne est supérieur à 150 μm. Ces fibres creuses peuvent être isotropes, c'est à dire que leurs pores sont répartis de façon uniforme dans leur épaisseur, ou peuvent être anisotropes, c'est à dire que de telles fibres ont au moins une couche active de séparation supportée par une couche poreuse dont le diamètre des pores est plus important. Cette couche active, appelée aussi peau, peut être sur la paroi externe et/ou interne des dites fibres. La distance entre les parois externe et interne des fibres creuses, appelée aussi épaisseur de paroi, est généralement comprise entre 50 et 450 μm, de préférence entre 100 et 300 μm.

En ce qui concerne plus particulièrement le diamètre des pores de ces fibres il oscille généralement entre 3 mm (30 Å) et 1000 mm (10 000 Å) (Angströms). Lorsqu'il s'agit de fibres creuses utilisées en microfiltration, elle sont généralement isotropes et le diamètre des pores est compris entre 10 et 1000 mm (100 et 10 000 Å). Lorsqu'il s'agit de fibres creuses utilisées en ultrafiltration, elles sont avantageusement anisotropes ou asymétriques, c'est à dire à peau, cette dernière ayant des pores généralement compris entre 3 et 30 mm (30 et 300 Å), tandis que la couche poreuse sous-jacente a des pores de diamètre plus importants. L'épaisseur de cette peau varie généralement entre 0,05 et 10 μm. Les fibres creuses selon la présente invention, lorsqu'elles sont utilisées en ultrafiltration, ont une grande gamme de seuils (zones) de coupure. Par seuil (ou zone) de coupure d'une membrane on désigne le poids moléculaire limite approximatif de protéines à partir duquel les dites protéines sont retenues par la membrane à raison de plus 90 % en poids ; la détermination de ce poids moléculaire limite se fait de préférence à l'aide de protéines.

Les membranes semi-perméables selon la présente invention peuvent être également sous forme de membranes planes, c'est à dire de pellicules ou feuilles. Ces membranes peuvent être isotropes ou anisotropes, (c'est à dire peau) et les dimensions de leur épaisseur ou de leurs pores correspondent à celles des fibres creuses ci-avant. Eventuellement ces membranes planes peuvent être renforcées méca-

2

niquement par un tissu ou un non-tissé, appelé "trame" par les gens du métier, ce tissu pouvant être par exemple un tissu monofilament en polyester par exemple en polytéréphatalate d'éthylène-glycol, en polyamide, par exemple 6-6, en polypropylène ayant un grammage compris entre 40 et 150g/m² (gramme par mètre carré).

Les membranes selon la présente invention comprennent au moins 70% en poids, et de préférence plus de 85 % en poids de polyfluorure de vinylidène (PVDF). Ce produit est largement commercialisé notamment par la société PENNWALT (sous la marque Kynar), par la société SOLVAY (sous la marque SOLEF) ou par la société ATOCHEM (sous la marque FORAFLON).

Les polymères hydrophiles permettant d'obtenir des membranes semi-perméables contenant plus de 70 % en poids de PVDF, tout en étant séchables et en conservant leurs propriétés hydrophiles et de séparation sont choisis parmi :
- les polysulfones sulfonées, notamment les polyaryléthersulfones sulfonées telles que celles décrites dans le brevet américain 3,709,841.
- les copolymères d'acrylonitrile et de monomères contenant des groupements sulfoniques, tels que par exemple les copolymères d'acrylonitrile et de méthallyle sulfonate de sodium avec éventuellement du méthacrylate de méthyle.....

Les membranes selon la présente invention n'ont pas besoin d'être étirées après leur obtention et sont préparées par simple dissolution du PVDF et du polymère hydrophile dans un solvant ou un mélange de solvants pour obtenir une solution homogène, c'est à dire une solution qui reste limpide au repos (sans agitation) et à température ambiante, sans que l'on constate (à l'oeil nu) dans le temps (par exemple 24 heures) l'apparition de louche, d'opalescence ou la formation de couches distinctes.

Les solvants utilisés sont choisis avantageusement parmi les solvant polaires comme par exemple le diméthylformamide, le diméthylacétamide, la N-méthylpyrrolidone, le diméthylsulfoxyde ou leurs mélanges.

Pour préparer les membranes selon la présente invention on opère de la façon suivante. On commence par préparer une solution homogène dans un solvant polaire, du PVDF et du polymère hydrophile, le PVDF représentant au moins 70 % en poids du poids total de polymère. Pour cela on introduit progressivement dans le solvant polaire à temperature ambiante et sous agitation, le polymère hydrophile et le PVDF. On porte ensuite la température du milieu entre 65°C et 100°C et on agite à cette température entre 2 heures et 6 heures. Avantageusement la solution obtenue après refroidissement à température ambiante peut être filtrée, par exemple sur DIATROSE WRJ commercialisée par la société La Rochette CENPA, puis la solution homogène obtenue peut être conservée à température ambiante entre 1 et 48 heures. Il peut être avantageux dans certains cas, avant d'introduire les polymères dans le solvant polaire, d'ajouter de faibles quantités d'eau, par exemple des quantités d'eau inférieure à 2 %, de préférence inférieure à 1 % par rapport au poids de solvant polaire. On peut également ajouter, au mélange du solvant polaire et d'eau, de faibles quantités de chlorure de lithium, généralement inférieure à 2 % rapport au poids du solvant polaire, que l'on dissout parfaitement dans ce dernier avant l'introduction des polymères. Lorsque de l'eau a été ajoutée il est préférable par la suite de ne pas dépasser 100°C pendant le temps d'agitation des polymères.

La solution homogène des polymères est alors passée en continu au travers d'une filière de forme annulaire pour obtenir des fibres creuses, ou en forme de fente pour obtenir des membranes planes.

Pour obtenir plus particulièrement des membranes planes, à la sortie de la filière la solution homogène des polymères est coulée sur une trame qui avance en même temps que et sur uné bande métallique sans fin, c'est à dire une bande tournant autour de deux rouleaux espacés l'un de l'autre. La solution déposée sur la trame est alors immergée dans un bain, contenant essentiellement de l'eau, à une température comprise entre 1 et 35°C. Avantageusement la membrane obtenue subit ensuite un traitement thermique en milieu aqueux à une température comprise entre 65 et 95°C.

Les exemples suivants illustrent les membranes selon la présente invention ainsi que les modes d'obtention de ces membranes.

EXEMPLE 1: montrant qu'une membrane en PVDF, ne contenant pas de polymère hydrophile, perd ses propriétés de filtration après avoir été séchée.

On charge dans un réacteur agité et thermostaté:
- 2 475 g de diméthylformamide
- 15 g d'eau distillée et
- 30 g de chlorure de lithium.
On agite 15 mn (minutes) à 23°C pour dissoudre le chlorure de lithium.
On ajoute alors en pluie et sous agitation :
- 480 g de polyfluorure de vinylidène (commercialisé par la société ATOCHEM sous la marque FORAFLON 1000HD).
On élève alors en 75 mn la température à 95°C et on la maintient pendant 5 heures. La solution obtenue est filtrée sur diatrose WRJ puis stockée dans un réservoir à 25°C pendant 8 heures.
Cette solution est coulée en continu, par l'intermédiaire d'une filière alimentée par une pompe doseuse, sur une trame constituée par un tissu polyester monobrin d'épaisseur 85 μm et d'ouverture de maille 75 μm qui se déplace sur une bande d'acier et en même temps que cette dernière à la vitesse de 1m/mn (1 mè-

tre par minute). Après un passage en atmosphère contrôlée (degré hydromètrique 35 %, température 23°C) le film de solution de polyfluorure de vinylidène est coagulé 12 µm dans de l'eau à 19°C, puis traité dans de l'eau à 80°C pendant 5mn.

On obtient une membrane de structure poreuse asymétrique dont on conserve une partie immergée dans l'eau distillée et dont on sèche l'autre partie 24 heures à 50°C en étuve ventilée.

On mesure sur ces deux échantillons le débit à l'eau distillée et le taux de rejet à l'albumine bovine. On opère avec une cellule AMICON modèle 52. Pour le taux de rejet à l'albumine (poids moléculaire 67 000 daltons). On utilise une solution aqueuse à 2g/l tamponnée à pH 7,4.

L'échantillon de membrane sèchée présente un caractère nettement hydrophobe et il faut atteindre une pression de 1 bar pour obtenir un débit à l'eau très faible, moins de 1 litre/hm². 1 bar (litres par heure, par m², sous 1 bar de pression différentielle), ce qui rend cette membrane inutilisable en ultrafiltration.

Par contre la membrane conservée humide conduit à des propriétés très différentes. Le débit à l'eau mesuré une pression différentielle de 1 bar est de 200 litres/hm² et le taux de rejet à l'albumine bovine de 80 %. Le taux de rejet à la gamma-globuline (PM 157 000 daltons) est de 100%.

EXEMPLE 2 :(Membrane selon l'invention)

On met en solution:
- 480 g de polyfluorure de vinylidène (commercialisé par la société ATOCHEM sous la marque FORAFLON 1000HD) et
- 60g de polyacétate de cellulose dont l'indice d'acétyle est de 55 % et dont la viscosité à 23°C en solution à 12% P/P dans l'acétone est de 297 centipascals par seconde, dans le mélange suivant :
- chlorue de lithium : 30 g
- eau distillée : 15 g
- diméthylformamide : 2 415 g

Pour cela on charge dans un réacteur thermostaté le diméthylformamide, l'eau déminéralisée et le chlorure de lithium. On agite à 23°C pendant 15 mn pour assurer la dissolution du chlorure de lithium. On charge ensuite sous agitation le polyacétate de cellulose puis le polyfluorure de vinylidène en 10mm et on élève la température du milieu de 23°C à 95°C en 75 mn. On maintient la température à 95°C et une agitation (300t/mn) pendant 5 heures. La solution obtenue est alors filtrée sur diatrose WRJ, chargée dans un réservoir dans lequel on la laisse reposer pendant 8 heures pour assurer son dégazage et sa stabilisation à 25°C.

Cette solution est ensuite coulée en continu, par l'intermédiaire d'une filière alimentée par une pompe doseuse, sur une trame constituée d'un fil monobrin en polyamide 6/6 d'épaisseur 120 µm et de vide de maille de 71 µm. Cette trame est supportée par une bande d'acier sans fin (tournant autour de 2 rouleaux à une certaine distance l'un de l'autre) qui se déplace à la même vitesse que cette bande, à 1m/mn. Après un passage en atmosphère conditionné (23°C, degré hygrométrique 35 %) de 45 secondes le film polymérique est coagulé dans l'eau à 20°C pendant 12 mn puis traité thermiquement dans l'eau à 80°C pendant 5 mn. On obtient une membrane qui présente une structure poreuse anisotrope caractérique des membranes d'ultrafiltration obtenues suivant le procédé dit d'inversion de phase.

On conserve un échantillon de cette membrane humide dans l'eau distillée, tandis qu'un second échantillon est mis à sécher 48 h, à 50°C en étuve ventillée.

Sur ces deux échantillons on mesure le débit à l'eau distillée et le taux de rejet pour l'albumine bovine (poids moléculaire 67 000 daltons), ainsi que pour les gamma globulines (PM 156 000 daltons).

On opère sur une cellule AMICON modèle 52 à la pression relative de 20 grammes et pour une concentration en protéines de 2g/l à pH 7,4.

On obtient des résultats sensiblement identiques sur l'échantillon conservé humide et sur l'échantillon séché, soit :

| TYPE DE MEMBRANE | EPAISSEUR (Totale) µm | DEBIT DE L'EAU 1/h.m².1 bar | TAUX DE REJET Albumine bovine | gamma globulines |
|---|---|---|---|---|
| Conservée humide | 167 | 3600 | 30% | 81% |
| Séchée | 165 | 3500 | 30% | 81% |

Les taux de rejets sont calculés suivant la formule :

$$TR = \frac{\text{Concentration retentat} - \text{concentration ultrafiltrat}}{\text{Concentration retentat}} \times 100$$

On remarque donc que le séchage ne modifie pas les caractéristiques de cette membrane et qu'elle est réutilisable sans traitement préalable après avoir été séchée. On remarque également que les débits d'eau obtenus avec cette membrane sont très supérieurs à ceux obtenus avec la membrane selon l'exemple 1.

EXEMPLE 3 : membrane selon l'invention

On prépare de la même façon que dans l'exemple 2 une solution de composition :
- polyfluorure de vinylidène : 12,6% soit 378 g
- polyacétate de cellulose : 1,4% soit 42 g
- chlorue de lithium : 1 % soit 30 g
- eau distillée : 0,5 soit 15 g
- diméthylformamide : 84,5 soit 2 535 g

Toujours de même manière que dans l'exemple 2 on prépare une membrane poreuse asymétrique mais qui est armée par un tissu polyester monobrin d'épaisseur 85 μm et d'ouverture de maille 75 μm.

Comme précédemment on mesure sur un échantillon de membrane humide et sur un échantillon de membrane séchée, le débit à l'eau distillée et le taux de rejet sur une solution aqueuse à 2 g/l et tamponnée à Ph 7,4 d'albumine bovine et sur une solution 2g/l de gamma globulines. On obtient pour les deux echantillons des résultats identiques.

| TYPE DE MEMBRANE | EPAISSEUR (Totale) μm | DEBIT DE L'EAU 1/h.m$^2$.1 bar | TAUX DE REJET Albumine bovine | gamma globulines |
|---|---|---|---|---|
| Conservée humide ou séchée | 187 | 8220 | 11,5% | 80,3% |

Par ce procédé il est donc possible de préparer des membranes à base de PVDF qui présentent des débits à l'eau importants pour un seuil de coupure qui se situe ici aux environs de 200 000 daltons.

EXEMPLE 4 ; membrane selon l'invention.

On met en solution de la même manière que dans les exemples précédents 160 g de polyfluorure de vinylidène (FORAFLON 1000 HD) et 20 g d'une polysulfone sulfonée (obtenue suivant l'exemple 1 décrit dans le brevet français n° 2 040 959 de la Société RHONE-POULENC), dans le milieu constitué de 10 g chlorure de lithium, 5 g d'eau distillée et 805g de diméthylformamide.

On emploie cette solution à la préparation d'une membrane suivant le procédé décrit précédemment à l'exemple 3. Dans le cas présent on a incorporé à cette membrane un tissu monobrin à base de polyamide d'épaisseur 120 μm, et d'ouverture de maille 75 μm.

On compare les propriétés de la membrane séchée et de la membrane conservée à l'état humide. On obtient:

| TYPE DE MEMBRANE | DEBIT DE L'EAU 1/h.m$^2$.1 bar | TAUX DE REJET Albumine bovine |
|---|---|---|
| Conservée humide | 1740 | 32% |
| Séchée | 2380 | 32% |

**Revendications**

1. Membranes semi-perméables hydrophiles et séchables en conservant leurs propriétés, constituées par un mélange de ployfluorure de vinylidéne avec un polymère hydrophile caractérisés en ce que ledit mélange contient plus de 70% en poids d'un PVDF et moins de 30% en poids d'un ploymère hydrophile pris dans le groupe formé par les polysulfones sulfonées et les copolymères de l'acrylonitrile avec des monomères contenant des groupements sulfoniques.

2. Membranes selon la revendication 1, caractérisées en ce qu'elles contiennent plus de 85 % de PVDF et moins de 15 % de polymère hydrophile.

3. Membranes selon l'une quelconque des revendications précédentes, caractérisées en ce qu'elles sont obtenues à partir d'une solution homogène de PVDF et du polymère hydrophile, mise en forme, puis coagulée.

4. Membranes selon l'une quelconque des revendications précédentes, caractérisées en ce qu'elles sont isotropes ou anisotropes, sous forme de membranes planes ou sous forme de fibres creuses.

5. Membranes selon l'une queconque des revendications précédentes, caractérisées en ce qu'elles sont utilisées en ultrafiltration ou en microfiltration.

6. Procédé d'obtention de membranes semi-perméables hydrophiles et séchables en conservant leurs propriétés, à base de polyfluorure de vinylidène (PVDF), caractérisé en ce qu'on prépare une solution homogène dans un solvant polaire, de PVDF et d'un polymère hydrophile pris dans le groupe fromé par les polysulfones sulfonées et les copolymères de l'acrylonitrile avec des monomères contenant des groupements sulfoniques, le pourcentage en poids du PVDF par rapport au polymère hydrophile étant au moins de 70 %, en ce que l'on coule ladite solution homogène de manière à obtenir une membrane que l'on coagule dans un bain.

7. Procédé selon la revendication 6, caractérisé en ce que l'on renforce les propriétés mécaniques de la membrane en coulant la solution homogène sur un tissu ou un non-tissé.

8. Procédé selon l'une des revendication 6 et 7, caractérisé en ce que l'on coagule la membrane dans un bain d'eau à une température comprise entre 1 et 35°C, puis en ce que l'on fait subir à la membrane un traitement thermique à une température comprise entre 65°C et 95°C.

## Claims

1. Hydrophilic semipermeable membranes capable of being dried while retaining their properties, consisting of a mixture of polyvinylidene fluoride and a hydrophilic polymer, characterized in that the said mixture contains more than 70% by weight of PVDF and less than 30% by weight of a hydrophilic polymer chosen from the group consisting of sulphonated polysulphones and acrylonitrile copolymers with monomers containing sulphonic groups.

2. Membranes according to claim, characterized in that they contain more than 85% by weight of PVDF and less than 15% of hydrophilic polymer.

3. Membranes according to either of the preceding claims, characterized in that they are produced from a homogeneous solution of PVDF and of the hydrophilic polymer, which is shaped and then coagulated.

4. Membranes according to any one of the preceding claims, characterized in that they are isotropic or anisotropic, in the form of planar membranes or in the form of hollow fibres.

5. Membranes according to any of the preceding claims, characterized in that they are employed in ultrafiltration or in microfiltration.

6. Process for producing hydrophilic semipermeable membranes capable of being dried while retaining their properties, based on polyvinylidene fluoride (PVDF), characterized in that a homogeneous solution of PVDF and of hydrophilic polymer chosen from the group consisting of sulphonated polysulphones and acrylonitrile copolymers with monomers containing sulphonic groups is prepared in a polar solvent, the weight percentage of PVDF relative to the hydrophilic polymer being at least 70%, and in that the said homogeneous solution is cast so as to produce a membrane which is coagulated in a bath.

7. Process according to claim 6, characterized in that the mechanical properties of the membrane are strengthened by casting the homogeneous solution onto a woven or nonwoven fabric.

8. Process according to either of claims 6 and 7, characterized in that the membrane is coagulated in a bath of water at a temperature of between 1 and 35°C and that the membrane is then subjected to a heat treatment at a temperature of between 65°C and 95°C.

## Patentansprüche

1. Semipermeable hydrophile Membranen, die unter Beibehaltung ihrer Eigenschaften trockenbar sind, bestehend aus einem Gemisch von Polyvinylidenfluorid mit einem hydrophilen Polymeren, dadurch gekennzeichnet, daß das Gemisch mehr als 70 Gew.-% PVDF und weniger als 30 Gew.-% eines hydrophilen Polymeren, genommen aus der Gruppe gebildet durch die sulfonierten Polysulfone und die Copolymeren des Acrylnitrils mit Sulfongruppen enthaltenden Monomeren, enthält.

2. Membranen gemäß Anspruch 1, dadurch gekennzeichnet, daß sie mehr als 85 Gew.-% PVDF und weniger als 15 Gew.-% hydrophiles Polymeres enthalten.

3. Membranen gemäß einem der vorhergehenden Ansprüche, dadurch gekennzeichnet, daß sie, ausgehend von einer homogenen Lösung von PVDF und des hydrophilen Polymeren, die nach Formgebung koaguliert, wird, erhalten sind.

4. Membranen gemäß einem der vorhergehenden Ansprüche, dadurch gekennzeichnet, daß sie isotrop oder anisotrop in Form von ebenen Membranen oder in Form von Hohlfasern vorliegen.

5. Membranen gemäß einem der vorhergehenden Ansprüche, dadurch gekennzeichnet, daß sie in der Ultrafiltration oder in der Mikrofiltration verwendet werden.

6. Verfahren zur Herstellung der hydrophilen, semipermeablen und unter Beibehaltung ihrer Eigenschaften trocknenden Membranen auf Basis von Polyvinylidenfluorid (PVDF), dadurch gekennzeichnet, daß man eine homogene Lösung in einem polaren Lösungsmittel von PVDF und einem hydrophilen Polymeren, ausgewählt aus der Gruppe, die von den sulfonierten Polysulfonen und den Copolymeren des Acrylnitrils mit Sulfongruppen enthaltenden Monomeren gebildet ist, herstellt, wobei das Gewichtsprozentverhältnis von PVDF im Bezug auf das hydrophile Polymere mindestens 70% beträgt, daß man diese homogene Lösung derart vergießt, daß eine Membran erhalten wird, die man in einem Bad koaguliert.

7. Verfahren gemäß Anspruch 6, dadurch gekennzeichnet, daß man die mechanischen Eigenschaften der Membran verstärkt, indem die homogene Lösung auf ein Gewebe oder Nichtgewebe gegossen wird.

8. Verfahren gemäß einem der Ansprüche 6 und 7, dadurch gekennzeichnet, daß man die Membran in einem Wasserbad bei einer Temperatur zwischen 1°C und 35°C koaguliert, und daß man dann die Membran einer thermischen Behandlung bei einer Temperatur zwischen 65°C und 95°C unterwirft.